(19) Europäisches Patentamt
European Patent Office
Office européen des brevets

(11) **EP 3 933 121 A1**

(12) **EUROPEAN PATENT APPLICATION**

(43) Date of publication:
**05.01.2022 Bulletin 2022/01**

(21) Application number: **21183330.6**

(22) Date of filing: **02.07.2021**

(51) Int Cl.:
*E02F 9/22* (2006.01)  *F16H 61/47* (2010.01)
*F16H 61/465* (2010.01)  *B60W 30/188* (2012.01)
*F16H 61/431* (2010.01)  *F16H 61/421* (2010.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.07.2020 IT 202000016066**

(71) Applicant: **CNH Industrial Italia S.p.A.**
**10135 Torino (IT)**

(72) Inventors:
• **GARRAMONE, Adriano**
**73100 Lecce (IT)**
• **GRAVILI, Andrea**
**73100 Lecce (IT)**
• **LIBERTI, Stefano**
**73100 Lecce (IT)**
• **VENEZIA, Antonio**
**10153 Torino (IT)**

(74) Representative: **CNH Industrial IP Department**
**Leon Claeysstraat 3A**
**8210 Zedelgem (BE)**

(54) **SYSTEM FOR CONTROLLING A PROPULSION SYSTEM OF A WORK OR AGRICULTURAL VEHICLE**

(57)     A method of controlling a propulsion system of a work or agricultural vehicle, with hydraulic transmission adapted to work according to a first operating mode (ST1) in which an inclination of an accelerator lever proportionally determines a rotation speed of the prime mover and a second operating mode (ST2) in which said lever inclination indicates a vehicle speed, while the prime mover is operated at a predetermined approximately fixed operating point, the method, in said first operating mode, comprising a first step (Step 1) of verification that a vehicle speed is approximately constant for a predetermined time interval, then when the verification is positive (yes), a second step (Step 2) in which the propulsion system is automatically controlled to reduce the rotation speed of the prime mover moving to said predetermined operating point and to adapt the hydraulic transmission so as to maintain the vehicle speed was unchanged during the reduction of the rotation speed of the prime mover.

Fig. 1

**Description**

**Field of the invetion**

The present invention relates to the field of hydraulic transmissions of work machines and agricultural machines.

**State of the art**

In work and agricultural vehicles, the transmission for transferring the motion from a prime mover to the wheels is hydraulic. Very often, the transmission defines a series configuration, in which the prime mover drives a variable displacement hydraulic pump, which in turn operates a hydraulic motor which can have both fixed and variable displacement.

The pump and the hydraulic motor are interconnected in a per se known way by means of a so-called forward hydraulic line and a return hydraulic line.

A discrete gearbox is often, but not always, arranged between the hydraulic motor and the wheels. Very often, there are just two relationships, to facilitate the autonomous movement of the vehicle from one place to another workplace.

Generally, the rotation speed of the prime mover is directly proportional to the position of the accelerator lever and the displacement of the pump is proportional to the rotation speed of the prime mover, while the displacement of the hydraulic motor is inversely proportional to the vehicle speed.

Consequently, the vehicle speed and the rotation speed of the prime mover are approximately directly proportional to each other. This first mode of operation is for convenience defined as "basic accelerator", since the rotation speed of the prime mover is approximately directly proportional to the position of the accelerator lever and the vehicle speed depends on the rotation speed of the prime mover.

The term "approximately" indicates that the control is in open loop, therefore an increase in the slope brings the vehicle and also the prime mover to slow down.

This behaviour is very advantageous when the vehicle is working because the driver can manage with the accelerator lever the generation of hydraulic fluid necessary to operate the various on-board devices functional to the processes. However, when the vehicle moves from one workplace to another, the fuel consumption can be excessive.

Hereafter "prime mover speed" means "prime mover rotation speed".

If not specifically excluded in the detailed description that follows, what is described in this chapter is to be considered as an integral part of the detailed description.

**Summary of the invention**

The object of the present invention is to reduce the fuel consumption of a work or agricultural vehicle especially when moving from one workplace to another.

The basic idea of the present invention is to monitor the vehicle speed and when this is approximately constant for a predetermined time interval, then the transmission and the prime mover are automatically controlled so that, without varying the vehicle speed, the prime mover rotation speed is reduced to a more favourable operating point for fuel consumption.

This second operating mode is defined hereafter as "ECO" mode, for convenience.

Preferably, the following are also monitored simultaneously:

- The speed of the vehicle,
- The rotation speed of the engine,
- The position of the accelerator lever

which must be constant in the aforementioned time interval in order to switch to ECO mode.

In addition, the following conditions must be verified to remain in ECO mode:

- The torque delivered must be less than a predetermined torque threshold,
- The rotation speed of the prime mover must be greater than a predetermined speed threshold,
- The pressure on the forward (or return) line during forward (or reverse) travel must be less than a predetermined pressure threshold.

When all the above conditions are verified, the processing unit that controls the operation of the prime mover and the transmission causes:

- A reduction in the rotation speed of the prime mover to a more efficient operating point,
- An increase in the pump displacement and/or a reduction in the displacement of the hydraulic motor,

keeping the vehicle speed unchanged. On the contrary, when one of the aforementioned operating conditions is not verified, the processing unit causes the switching to the first operating mode, i.e. basic accelerator.

Preferably, a feedback control is activated which controls the displacement of the hydraulic motor and/or pump as a function of the vehicle speed to keep the vehicle speed constant.

Preferably, further feedback control is performed on the prime mover speed to maintain the prime mover speed sufficiently constant.

The ECO operating mode is interrupted, returning to the basic accelerator operating mode, even when

- The operator acts quickly on the accelerator lever and/or
- The load applied to the prime mover exceeds a predetermined threshold, for example in the case of a climb with a slope greater than a predetermined threshold.

Obviously, the rapidity of variation of the position of the accelerator lever as well as the variation of the slope of the road must exceed respective thresholds in order to cause the control switching from ECO to basic accelerator. Conversely, when instead a gentle action on the accelerator lever or a slight variation in the slope of the road traveled by the vehicle is detected, it is envisaged to adapt the pump and/or hydraulic motor displacement to respectively adapt the vehicle speed to the inclination of the throttle lever or keep the vehicle speed unchanged.

In other words, ECO mode is maintained within certain operating conditions, avoiding continuous switching between the first and second operating modes.

In other words, in the ECO mode, the position of the accelerator lever affects the hydraulic transmission rather than the speed of the prime mover, within the limits and in compliance with the above conditions regarding the torque delivered by the prime mover and the pressure on the forward (or return) line.

Preferably, it switches from ECO mode to basic-accelerator mode when any of the following conditions are verified:

- The pressure on the forward (or return) line during forward (or reverse) travel is higher than the predetermined pressure threshold,
- The inclination of the accelerator lever exceeds the inclination of the same in which the immediate previous changeover from accelerator-base to ECO was determined,
- The inclination of the accelerator lever is reduced below the inclination which corresponds in accelerator-based mode to the target speed of the prime mover,
- The speed of the prime mover drops below a predetermined threshold,
- The inclination of the operating control lever of a hydraulic organ such as an arm or similar, exceeds a predetermined threshold.

When switching from ECO to basic accelerator, the prime mover is controlled so as to reach the speed corresponding to the current inclination of the accelerator lever.

In other words, during the changes from ECO to basic accelerator and vice versa, the prime mover is controlled so that the trend of the rotation speed is connected by ramps. The dependent claims describe preferred variants of the invention, forming an integral part of this description.

**Brief description of the figures**

Further objects and advantages of the present invention will become clear from the following detailed description of an embodiment thereof (and of its variants) and from the annexed drawings given purely for explanatory and non-limiting purposes, in which:

Figure 1 shows an example of a propulsion scheme of a work or agricultural vehicle in which the present invention is implemented,
Figure 2 shows temporal diagrams of quantities during switching from the first to the second operating mode and vice versa;

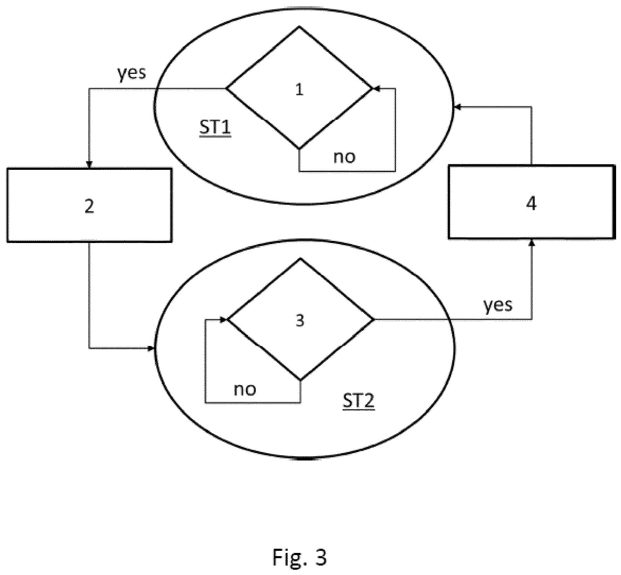

Figure 3 shows a flowchart which also reports the states of the control system object of the present invention.

The same numbers and the same reference letters in the figures identify the same elements or components or functions.

In the context of this description, the term "second" component does not imply the presence of a "first" component. These terms are in fact used as labels to improve clarity, having no ordinal meaning unless it is clear from the text that there is a precise order to be respected.

The elements and characteristics illustrated in the various preferred embodiments, including the drawings, can be combined with each other without however departing from the scope of the present application as described below.

## Detailed description of exemplary embodiments

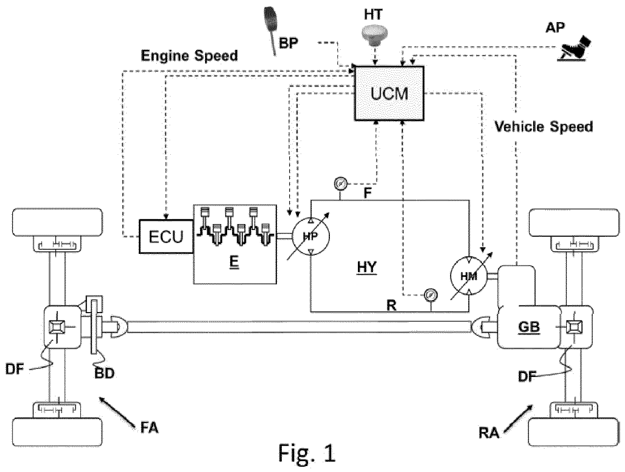

Figure 1 shows a scheme of the propulsion system of a work or agricultural vehicle.

The propulsion system comprises a prime mover E, generally an internal combustion engine, for example Diesel or spark ignition.

The prime mover is configured to drive a variable geometry hydraulic pump HP in rotation, which feeds a hydraulic motor HM, for vehicle propulsion, through a hydraulic line forward F and return R.

The hydraulic motor has a shaft operatively associated with a driving axle RA of the vehicle.

Preferably, this association is carried out by means of a discrete gearbox GB. Generally, the secondary shaft of the gearbox GB rotates a port of a differential DF to rotate the two axle shafts of the driving axle RA. The configuration shown in Figure 1 is a four-wheel drive, so that a rear driving axle RA and a front driving axle FA are identified.

The configuration shown is known per se.

According to the present invention, the hydraulic pump and the hydraulic motor can be controlled independently of each other by means of respective electro-hydraulic valves, not shown.

An engine control unit ECU controls the operation of the prime mover.

A vehicle processing unit UCM interfaces with the ECU engine control processing unit and controls the hydraulic transmission HY as well as monitors the position of the vehicle's control levers, buttons and controls, both in relation to vehicle movement and arms, shovels operation etc. which the work vehicle is or can be equipped with.

BP indicates the brake pedal, AP the accelerator pedal, HT the manual accelerator lever.

The existence of two distinct processing units is entirely optional. A single processing unit can control both the prime mover and all other vehicle functions and monitor the activation of controls by the operator.

The present invention is preferably implemented in the vehicular processing unit UCM, but it could be implemented in the ECU.

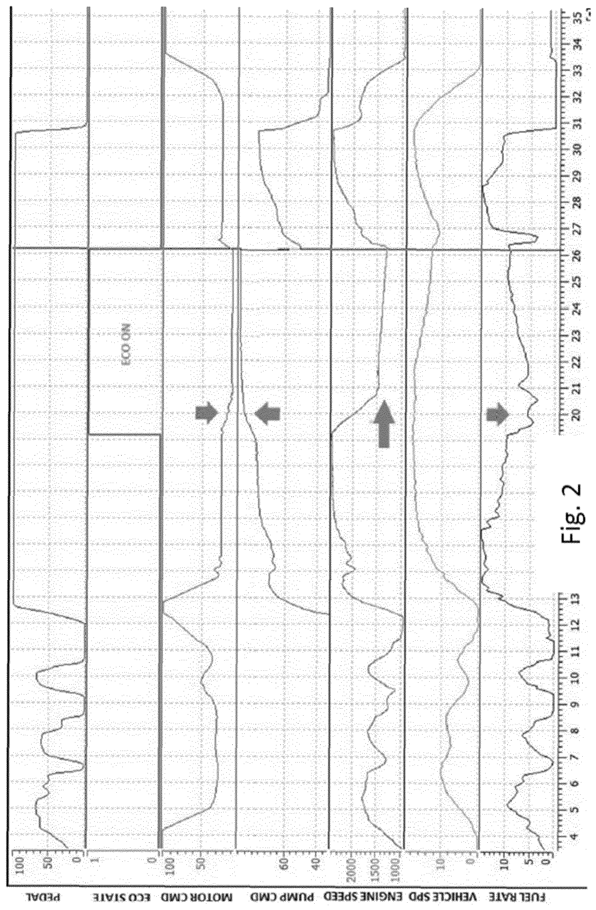

Figure 2 shows temporal trends of certain quantities useful for understanding the present invention.

The first "PEDAL" graph refers to the position of the accelerator lever. Zero indicates that the accelerator is fully released, while 100 indicates that the accelerator is fully depressed to obtain the maximum possible forward (or backward) speed of the vehicle.

The second "ECO STATE" graph shows the transitions between the first accelerator-base operating mode ST1 and the second ECO operating mode, ST2. This graph represents the output of the control object of the present invention.

The third graph "MOTOR CMD" shows the check carried out on the displacement of the hydraulic motor, between 0 and 100% of the displacement.

The fourth graph "PUMP CMD" shows the check carried out on the displacement of the hydraulic pump, between 0 and 100% of the displacement.

The fifth "ENGINE SPEED" graph shows the rotation speed of the prime mover. This is contained between about 1000 rpm, i.e. idle or minimum, and the nominal rotation speed, which is about 3000 rpm, but may depend on the characteristics of the prime mover.

The sixth "VEHICLE SPD" graph shows the vehicle speed. This is between 0 and for example 20 km/h.

The seventh graph "FUEL RATE" shows the fuel consumption by the prime mover. This is for example between 0 and about 15 g/h.

All the graphs are the consequence of a simultaneous acquisition, over time, of the relative quantities or states as described above.

With reference to the sixth graph, it is seen in the interval that in the interval 16-19, the trend is substantially constant. This causes the transition, visible in the second state graph from 0, corresponding to the first operating mode, to 100, corresponding to the second operating mode of the propulsion system. In other words, at instant 19, it switches from basic accelerator mode to ECO mode.

At the same time, the rotation speed of the prime mover is reduced from the rated speed to about 1500 rpm which, for example, represents an optimal speed in terms of efficiency for the heat engine defining the prime mover.

The motor speed can be measured in any way, for example by means of the so-called phonic wheel associated with the motor shaft (not shown).

At the same time, the displacement of the hydraulic pump is increased, while the displacement of the hydraulic motor is reduced.

The arrows show these variations that affect the propulsion system and in particular the speed of the prime mover (Engine Speed) and the displacement of the hydraulic transmission.

The effect can be immediately detected by observing that the fuel consumption graph is reduced to 1/3 of the nominal consumption and then settles down to about 2/3, with fuel savings of over 30%.

Other quantities can be acquired or calculated contextually. For example, a pressure sensor MA is arranged on the forward hydraulic line and a pressure sensor MB is arranged on the return hydraulic line.

The lever HT of the accelerator is associated with an angle sensor to determine the position of the same lever, both in forward and reverse gear, considering that in some agricultural machines, generally, a single lever allows to control both directions of travel.

According to the present invention the control causes the switching between

- a first operating mode in which the inclination of the accelerator lever determines proportionally a rotation speed of the prime mover and consequently a proportional vehicle speed and
- a second operating mode in which the inclination of the accelerator lever indicates a vehicle speed, while the prime mover is operated at a predetermined approximately fixed operating point, regardless of the vehicle speed (Vehicle Speed).

The control object of the present invention, when operating in the usual first operating mode, includes:

- a first step (Step 1) of verification that the vehicle speed is approximately constant for a predetermined time interval, then when the verification is positive
- a second step (Step 2) in which the propulsion system is automatically controlled to enter ECO mode, i.e. to reduce the rotation speed of the prime mover by moving to the predetermined operating point and to adapt the HY hydraulic transmission so that to keep the vehicle speed unchanged when switching from the first to the second operating mode, i.e. during the reduction of the rotation speed (Engine Speed) of the prime mover.

Preferably, the adaptation of the hydraulic transmission includes the fact of increasing the displacement of the pump and/or of reducing the displacement of the hydraulic motor, as shown in the third and fourth graph of Figure 2 in the time interval 19-21.

Preferably, to cause the switching from the first to the second operating mode, the processing unit further checks at least one of the following conditions

- The rotation speed of the prime mover,
- a position of the throttle lever (HT)

and when the rotation speed of the prime mover and/or the position of the lever are constant in the time interval, which in the graphs is defined by the interval 17 - 19, then the second step is performed which allows to switch from the first to the second operational mode.

When the propulsion system operates in accordance with the ECO mode (second operating mode), the control further includes a third step (Step 3) to verify the fulfillment of at least one of the following conditions

- The torque delivered by the prime mover is greater than a predetermined torque threshold,
- The rotation speed of the prime mover is lower than a predetermined speed threshold,
- The pressure on the forward (or return) line during forward (or reverse) travel is greater than a predetermined pressure threshold,
- The inclination of the accelerator lever exceeds the inclination of the same lever in the instant in which said second step determined the changeover to the second operating mode,
- An inclination of a control lever for operating a hydraulic member such as an arm or the like, exceeds a predetermined threshold,

and when said check is positive, then the method provides a fourth step (Step 4) to switch from the second to the first operating mode, that is to say to leave the ECO mode to return to the accelerator-base mode.

The check relating to the inclination of the accelerator lever, i.e. if it exceeds the inclination of the same lever at the instant in which said second step caused the changeover from the first to the second operating mode, corresponds to carrying out a check on the vehicle speed in the same instant of switching from the first to the second operating mode. This is because in the first operating mode the accelerator lever controls the rotation speed of the prime mover, while the pump and hydraulic motor change their displacement in a predetermined way, so that with the accelerator lever the vehicle speed is controlled as a consequence of the speed of rotation of the prime mover.

On the contrary, in the second operating mode, the prime mover is operated at a predetermined engine point, while the accelerator lever controls only the hydraulic transmission. Preferably, when the propulsion system switches to the second operating mode, a feedback control is activated which, at least during the switching, controls the displacement of the pump and/or hydraulic motor so as to keep the vehicle speed constant.

Preferably, the hydraulic pump is first checked until a target displacement which is approximately close to the maximum displacement is reached, then the feedback control on the hydraulic motor is activated, keeping the pump displacement unchanged.

Therefore, the closed loop control on the hydraulic motor is activated only after the control on the pump is considered stable. In other words, it is the serialization of two controls.

Preferably, the closed loop control on the hydraulic motor and on the pump are carried out by means of a respective PID controller comprising an "Anti wind up" function, that is to say a function that avoids over-elongation.

Known formulas are given below

$$Vp = Q * 1000 / RPME,$$

$$Vm = Q * 1000 / rpmM,$$

$$(Vspeed * TR) / (R * 3.6) = rpmM,$$

with

Vp [cc / rpm] pump displacement,
Q [1 / m] flow rate,
rpmE [rpm] number of revolutions of the heat engine,
rpmM speed of the hydraulic motor,
TR transmission ratio from hydraulic motor to wheels,
R spoke wheel.

By combining these formulas in a known way, by imposing the dependence on the position of the accelerator lever, a control law of the hydraulic motor in open circuit is obtained until the displacement necessary to maintain unchanged the speed of the vehicle during switching from the first to the second operational mode. Then the feedback control is activated with Anti wind up described above. According to a first preferred variant of the invention, the vehicle speed can be reduced without leaving ECO mode and subsequently it can also be brought back to the same speed as the instant in which the system activated ECO mode. While, the system returns to the first operating mode at exceeding the speed of the vehicle in which the ECO mode is activated.

According to a preferred variant of the invention, while the vehicle operates in the second operating mode, an excess variation in speed with respect to the speed in which the propulsion system has switched to the second operating mode is also possible. For example, if the vehicle travels at 15 km/h and the ECO mode is activated, the driver can slow down to 10 km/h, then he can accelerate by operating the accelerator lever up to 17 km/h.

If the nominal speed of the vehicle is greater than 17 km/h then this is allowed, otherwise, the speed is limited to the nominal speed of the vehicle, regardless of the availability of torque by the prime mover and a hydrostatic transmission ratio such as to allow exceeding the rated speed.

In other words, according to this variant of the invention, in ECO mode it is possible to reduce the vehicle speed more than it can be increased, especially in consideration of the limit of the nominal vehicle speed.

According to a preferred variant of the present invention, which combines with any of the previous variants, when the propulsion system operates in accordance with the second operating mode (ECO), a feedback control is activated on the speed of the prime mover in order to keep constant the rotation speed of the prime mover relative to said operating point.

The control on the hydraulic motor and the control on the prime mover can be operated in parallel and independently of each other.

According to a preferred variant of the present invention, which is combined with any of the previous variants, when the propulsion system operates in accordance with the second operating mode, the control further includes the fact of monitoring the speed with which the accelerator lever is operated.

If the action on the accelerator lever is rapid, then the system switches, Step 4, from the second operating mode (ECO) to the first "basic accelerator" operating mode.

If, on the other hand, the action is gentle, the control plans to adapt the pump and/or hydraulic motor displacement to adapt the vehicle speed to the inclination of the accelerator lever BP or AP, while the engine rotation speed remains unchanged at the predetermined engine point. Preferably, the feedback control on the transmission components, pump and hydraulic motor, are frozen after the transition caused by a change from the first to the second operating mode. This implies that the vehicle slows down when it encounters an ascent and accelerates when it encounters a descent.

The vehicle can be equipped with cruise control. If cruise control is deactivated, the feedback control on the transmission components remains frozen when the transient is completed. If, on the other hand, cruise control is active, then these feedback controls remain active for the duration of the second operating mode, so that in the event of a sudden load variation, for example due to the slope of the road travelled by the vehicle and/or the activation of a hydraulic user, they adapt to the new load conditions to keep the vehicle speed unchanged.

In particular, in case of activation of a hydraulic user, the feedback control on the hydraulic pump allows to adapt the displacement of the same to the new load conditions.

In other words, the propulsion system reacts autonomously to the "disturbance" that can come both from the outside, that is, the slope of the road, and from the inside, that is, a change in the inclination of the accelerator lever.

With reference to the second and fifth graph of figure 2, when ECO mode is activated at instant 19 or when it is deactivated at instant 26, the rotation speed of the prime mover follows a linear and exponential ramp respectively for adapt to the new operating mode.

The working or agricultural vehicle, also object of the present invention, in which the present control is implemented, can be equipped with different hydraulic functions. It is known that these functions are often activated by the same HP pump described above or by one or more independent pumps, all of which are driven in rotation by the prime mover. Preferably, traveling in ECO mode, if a hydraulic function is activated, a pre-set activation threshold of the actuation command is exceeded, for example beyond a certain inclination of the joystick lever, the control returns to work in the first operating mode in order not to affect the vehicle performance and in particular the response of the hydraulic actuators to the commands given by the user.

In the same way, an excessive pressure on the hydraulic lines, for example caused by an excessively steep ascent, or an excessive reduction in the rotation speed of the prime mover, although controlled in feedback, causes the switching from the second to the first operating mode.

The present invention can be advantageously carried out by means of a computer program, which comprises coding means for the realization of one or more steps of the method, when this program is executed on a computer. Therefore, it is understood that the scope of protection extends to said computer program and further to computer readable means which comprise a recorded message, said computer readable means comprising program coding means for carrying out one or more method steps, when this program is run on a computer.

Implementing variations to the non-limiting example described are possible, without however departing from the scope of protection of the present invention, including all the equivalent realizations for a person skilled in the art, to the content of the claims.

From the above description, the person skilled in the art is able to realize the object of the invention without introducing further construction details.

**Claims**

1. A method for controlling a propulsion system of a work or agricultural vehicle, wherein the propulsion system comprises a prime mover (E) and a hydraulic transmission (HY) comprising a variable displacement pump (HP) configured for be driven in rotation by the prime mover and a variable displacement hydraulic motor (HM), operatively connected to the pump by means of a forward (F) and a return (R) hydraulic line, the method providing

   - a first operating mode (ST1) wherein an inclination of an accelerator lever causes proportionally to a rotation speed of the prime mover and
   - a second operating mode (ST2) wherein said lever inclination causes a vehicle speed, while the prime mover is operated at a predetermined, approximately fixed, operating point,

   the method, in said first operating mode, comprising a first step (Step 1) of verification that a vehicle speed is approximately constant for a predetermined time interval, then when the verification is positive (yes), a second step (Step 2) where the propulsion system is automatically controlled for

   - reducing the rotation speed of the prime mover by moving to said predetermined operating point and for
   - adapting the hydraulic transmission so as to maintain the vehicle speed unchanged during switching from the first to the second operating mode.

2. The method according to claim 1, wherein said adaptation of the hydraulic transmission comprises increasing the displacement of the pump and/or reducing the displacement of the hydraulic motor.

3. Method according to claim 1 or 2, wherein said first step (Step 1) includes further check of also at least one of the following conditions

   - The rotation speed of the prime mover is constant,
   - a position of the lever (HT) of the accelerator is constant

   and when said check is positive in said time interval, then the second step is performed.

4. Method according to any one of the preceding claims, wherein, in said second operating mode, the method further comprises a third step (Step 3) of checking at least one of the following conditions

   - The torque delivered by the prime mover is greater than a predetermined torque threshold,
   - The rotation speed of the prime mover is lower than a predetermined speed threshold,
   - The pressure on the forward (or return) line during forward (or reverse) travel exceeds a predetermined pressure threshold,
   - The inclination of the accelerator lever exceeds the inclination of the same lever in the instant in which said second step caused the changeover to the second operating mode,
   - An inclination of a control lever for operating a hydraulic implement, such as an arm or the like, exceeds a predetermined threshold,

   and when said check is positive then the method provides a fourth step (Step 4) of switching from said second to said first operating mode.

5. Method according to any one of the preceding claims, wherein, in said at least during the transition between said first and second operating mode, a feedback control is activated which controls the displacement of the pump and/or hydraulic motor so as to keep constant vehicle speed.

6. Method according to any one of the preceding claims, wherein, when said second operating mode is reached, a feedback control is activated on the speed of the prime mover so as to keep the rotation speed of the prime mover constant at said operating point.

7. Method according to any one of the preceding claims 4 - 6, wherein, in said second operating mode, said third step further comprises the fact of detecting at least one of the following conditions

   - rapid action on the accelerator lever
   - a sudden change in load applied to the prime mover,

   and when at least one of the conditions is verified, the method involves the execution of the fourth step (Step 4) of switching from the second to the first operating mode.

8. Method according to any one of the preceding claims 1 to 7, wherein, in said second operating mode, a gentle action on the accelerator lever involves adapting the displacement of the pump and/or hydraulic motor to vary the vehicle speed without changing the operating point of the prime mover.

9. Method according to any one of the preceding claims 1 - 8, wherein, in said second operating mode, a slight variation in the load entails adapting the displacement of the pump and/or hydraulic motor to keep the vehicle speed unchanged when a cruise control function in active.

10. Method according to any one of the preceding claims, wherein in each changeover from the first to the second operating mode and vice versa, the rotation speed of the first motor is adapted so as to respectively reach said operating point and the speed corresponding to the inclination of the lever of the accelerator via a ramp.

11. Computer program comprising program coding means adapted to carry out all steps (1 - 4) of any one of claims 1 to 10, when said program is run on a computer.

**12.** Computer readable means comprising a recorded program, said computer readable means comprising program coding means adapted to carry out all steps (1 - 4) of any one of claims 1 to 10, when said program is run on a computer.

**13.** A working or agricultural vehicle comprising a propulsion system comprising a prime mover and a hydraulic transmission comprising a variable displacement pump configured to be driven in rotation by the prime mover and a variable displacement hydraulic motor, operatively connected to the pump by a forward and return hydraulic line, the propulsion system being arranged to operate according to

- a first operating mode (ST1) wherein an inclination of an accelerator lever proportionally causes a rotation speed of the prime mover and
- a second operating mode (ST2) wherein said lever inclination determines a vehicle speed, while the prime mover is operated at a predetermined, approximately fixed, operating point,

the system, in said first operating mode, being configured to verify that a vehicle speed is approximately constant for a predetermined time interval, and when the verification is positive (yes) for automatically

- reducing the rotation speed of the prime mover by moving to said predetermined operating point and for
- adapting the hydraulic transmission so as to maintain the vehicle speed unchanged during switching from the first to the second operating mode.

Fig. 1

Fig. 2

Fig. 3

Europäisches
Patentamt

European
Patent Office

Office européen
des brevets

## EUROPEAN SEARCH REPORT

Application Number

EP 21 18 3330

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 119 943 A2 (KOBELCO CRANES CO LTD [JP]; KOBE STEEL LTD [JP]) 18 November 2009 (2009-11-18) | 1-3,5,6, 8-13 | INV. E02F9/22 F16H61/47 |
| Y | * paragraphs [0007] - [0037]; figures 1-8 * | 4,7 | F16H61/465 B60W30/188 F16H61/431 |
| | ----- | | F16H61/421 |
| Y | JP 2015 110423 A (KUBOTA KK) 18 June 2015 (2015-06-18) | 4,7 | |
| A | * paragraphs [0005] - [0057]; figures 1-10 * | 1-3,5,6, 8-13 | |
| | ----- | | |
| A | US 2005/101436 A1 (FUNATO MASAHIRO [JP] ET AL) 12 May 2005 (2005-05-12) * paragraphs [0010] - [0087]; figures 1-15 * | 1-13 | |
| | ----- | | |
| A | JP 2014 065348 A (KUBOTA KK) 17 April 2014 (2014-04-17) * paragraphs [0003], [0008]; figures 1-10 * | 1-13 | |
| | ----- | | |

TECHNICAL FIELDS SEARCHED (IPC)

E02F
F16H
B60W

The present search report has been drawn up for all claims

| Place of search | Date of completion of the search | Examiner |
|---|---|---|
| Munich | 22 September 2021 | Ismail, Youssef |

EPO FORM 1503 03.82 (P04C01)

## ANNEX TO THE EUROPEAN SEARCH REPORT
## ON EUROPEAN PATENT APPLICATION NO.

EP 21 18 3330

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2021

| Patent document cited in search report | | Publication date | Patent family member(s) | | Publication date |
|---|---|---|---|---|---|
| EP 2119943 | A2 | 18-11-2009 | AT | 528554 T | 15-10-2011 |
| | | | EP | 2119943 A2 | 18-11-2009 |
| | | | JP | 4589979 B2 | 01-12-2010 |
| | | | JP | 2009275784 A | 26-11-2009 |
| JP 2015110423 | A | 18-06-2015 | JP | 6059268 B2 | 11-01-2017 |
| | | | JP | 2015110423 A | 18-06-2015 |
| US 2005101436 | A1 | 12-05-2005 | DE | 102004053533 A1 | 25-08-2005 |
| | | | JP | 4315888 B2 | 19-08-2009 |
| | | | JP | 2005163782 A | 23-06-2005 |
| | | | US | 2005101436 A1 | 12-05-2005 |
| JP 2014065348 | A | 17-04-2014 | NONE | | |

EPO FORM P0459

For more details about this annex : see Official Journal of the European Patent Office, No. 12/82